# EUROPÄISCHE PATENTSCHRIFT

(11) **EP 4 290 111 B1**
(45) Veröffentlichungstag und Bekanntmachung des Hinweises auf die Patenterteilung: **06.08.2025**
(21) Anmeldenummer: 23172181.2
(22) Anmeldetag: 09.05.2023
(51) Int. Cl.: F16L 37/088, G06K 19/073, G06K 19/077

(54) **VERBINDUNGSANORDNUNG UND VERFAHREN ZUM AUSLESBAREN ANZEIGEN EINES VERBINDUNGSSTATUS EINER VERBINDUNGSANORDNUNG**
CONNECTION ARRANGEMENT AND METHOD FOR READABLE DISPLAY OF A CONNECTION STATUS OF A CONNECTION ARRANGEMENT
DISPOSITIF DE CONNEXION ET PROCÉDÉ D'AFFICHAGE LISIBLE D'UN ÉTAT DE CONNEXION D'UN DISPOSITIF DE CONNEXION

(30) Priorität: 09.06.2022 DE 102022205865
(43) Veröffentlichungstag der Anmeldung: 13.12.2023
(73) Patentinhaber: ContiTech Techno-Chemie GmbH, 61184 Karben (DE)
(72) Erfinder: Stolle, Enrico, 30165 Hannover (DE); Linzmaier, Markus, 30165 Hannover (DE); Borchert, Lukas, 30165 Hannover (DE); Tauber, Marco, 30165 Hannover (DE)
(74) Vertreter: Preusser, Andrea

(56) Entgegenhaltungen:
- EP-A1- 3 544 114
- DE-A1- 102004 006 795
- US-A1- 2009 066 531
- US-A1- 2020 309 298
- US-A1- 2022 010 907

## Beschreibung

Die Erfindung betrifft eine Verbindungsanordnung, umfassend zwei zueinander komplementäre Verbinderteile, die aus einem separierten Verbindungsstatus in einen verbundenen Verbindungsstatus verbindbar sind, wobei ein Sender und eine zugeordnete Antennenanordnung vorgesehen sind, mittels derer ein den Verbindungsstatus signalisierendes Funksignal erzeugbar und über die Antennenanordnung sendbar ist.

Verbindungsanordnungen der eingangs genannten Art sind bekannt und dienen beispielsweise dazu, eine Flüssigkeitsrohr- oder -schlauchleitung auszubilden, wobei entsprechende Leitungsabschnitte über die Verbindungsanordnung miteinander verbunden werden. Die korrekte, insbesondere flüssigkeitsdichte Verbindung wird beispielsweise durch eine Verrastung der Verbinderteile sichergestellt, welche überdies einem ungewollten Lösen der korrekten Verbindung entgegenwirkt. Das Auslösen der verrastenden Verbindung, die beispielsweise über Federbügel bewirkt wird, die in entsprechende Nuten eingreifen, ist üblicherweise mit einem Klickgeräusch verbunden, welches akustisch und haptisch signalisiert, dass die korrekte Verbindung der Verbinderteile bewirkt worden ist. Bei automatisiert ablaufenden Montagen und/oder einer der Verbindung nachfolgenden Qualitätskontrolle ist diese Form der Signalisierung des korrekten verbundenen Verbindungsstatus nicht nutzbar.

Aus der US 2020/0309298 A1 ist es bekannt, den Verbindungsstatus mittels eines **RFID** Chips auslesbar zu signalisieren, der dazu an einem Verbinderbauteil angebracht wird und aktiv oder passiv angeregt ein Funksignal abgibt. Solange das den **RFID** Chip tragende Verbinderbauteil nicht mit dem hierzu komplementären Verbinderbauteil korrekt verbunden ist und im separierten Verbindungsstatus verharrt, wird der **RFID** Chip über ein bewegliches Abschirmbauteil derart abgeschirmt, dass das vom **RFID** Chip ausgesendete Funksignal nicht oder nur sehr schwach empfangen und ausgelesen werden kann. Bei korrekter Verbindung zum anderen Verbinderbauteil, d.h. im verbundenen Verbindungsstatus wird das Abschirmbauteil in eine solche Position bewegt, dass das Funksignal nicht mehr abgeschirmt wird und insoweit empfangen und ausgelesen werden kann.

Die WO 2021/183633 offenbart eine Schnellverbindungskupplung für eine Flüssigkeitsleitung, bei der das eine Verbinderbauteil einen RFID Chip und das andere Verbinderbauteil die zugehörige Antennenanordnung für den RFID Chip trägt. Lediglich im verbundenen Verbindungsstatus der beiden Verbinderbauteile kommen der RFID Chip und die zugeordnete Antennenanordnung derart in Kontakt miteinander, dass der RFID Chip über die Antennenanordnung ein extern empfangbares und auslesbares Funksignal sendet. Somit kann ebenfalls der verbundene Verbindungsstatus der Verbindungsanordnung auslesbar signalisiert werden.

Die vorangehend beschriebenen Lösungen aus dem Stand der Technik beruhen von daher auf dem Prinzip, den verbundenen Verbindungsstatus der Verbinderteile durch Ausgabe eines auslesbaren Funksignals vom RFID Chip anzuzeigen. Wenn eine Vielzahl von Verbindungsanordnungen in einem komplexen Bauteil zusammengefügt werden, beispielsweise die zahlreichen Kühlmittelleitungen des Fahrzeugakkus eines Elektrofahrzeugs, wird im Rahmen der Qualitätskontrolle von einer entsprechenden Auswerteeinheit eine Vielzahl von Signalen empfangen, sodass die Ermittlung einer einzelnen nicht erfolgreichen bzw. korrekten Verbindung nicht möglich ist. Überdies ist es für Unbefugte jederzeit möglich, die Daten der RFID Chips auszulesen, was unerwünscht ist.

Aus der DE 10 2004 006 795 A1 ist eine "Prüfbare Verbindung" bekannt, wobei mit der korrekten Verbindung der beiden Verbindungsteile ein vorzugsweise elektrischer Leiter geschlossen oder getrennt wird.

Aufgabe der Erfindung ist es, eine Verbindungsanordnung der eingangs genannten Art vorzuschlagen, die die Nachteile des Standes der Technik überwindet und auch bei Vorhandensein einer größeren Anzahl derartiger Verbindungsanordnung eine einfache gemeinsame Kontrolle des Verbindungsstatus aller vorhandenen Verbindungsanordnungen ermöglicht.

Zur Lösung der gestellten Aufgabe wird erfindungsgemäß die Ausgestaltung einer Verbindungsanordnung mit den Merkmalen des Patentanspruches 1 vorgeschlagen.

Ein Verfahren zur Lösung der gestellten Aufgabe ist Gegenstand des Patentanspruchs 5.

Vorteilhafte Ausgestaltungen und Weiterbildungen der Erfindung sind Gegenstand der abhängigen Ansprüche.

Im Rahmen der erfindungsgemäßen Verbindungsanordnung wird vorgeschlagen, dass eine Abschwächungseinrichtung vorgesehen ist, die im verbundenen Verbindungsstatus der Verbindungsanordnung mit der Antennenanordnung in Wirkverbindung tritt und das von dieser gesendete Funksignal abschwächt.

Aufgrund der erfindungsgemäß vorgesehenen Abschwächungseinrichtung ist es von daher möglich, den separierten Verbindungsstatus durch ein vom Sender und der zugeordneten Antenneneinrichtung gesendetes und nicht durch die Abschwächungseinrichtung abgeschwächtes Funksignal anzuzeigen, welches eine entsprechend hohe Reichweite aufweist und auch von einer entfernt angeordneten Detektionseinrichtung bzw. einem Funkempfänger ermittelt werden kann. Hingegen wird erfindungsgemäß der verbundene Verbindungsstatus dadurch angezeigt, dass die Abschwächungseinrichtung in diesem Verbindungsstatus mit der Antennenanordnung in Wirkverbindung tritt und das von dieser gesendete Funksignal abschwächt, welches sodann von einer entfernt angeordneten Detektionseinrichtung nicht mehr ermittelt werden kann. Mit anderen Worten liegt ein separierter Verbindungsstatus vor, wenn nicht abgeschwächte Funksignale empfangen werden und es liegt ein verbundener Verbindungsstatus der erfindungsgemäßen Verbindungsanordnung vor, wenn kein Funksignal des Senders mehr empfangen werden kann.

Dadurch ist es möglich, beispielsweise mehrere in einer Baugruppe zusammengefasste Verbindungsanordnungen in einem einzelnen Prüflauf während oder nach der Montage auf ihren gewünschten verbundenen Verbindungsstatus gleichzeitig zu prüfen. Sofern alle Verbindungsanordnungen sich im verbundenen Verbindungsstatus befinden, werden alle von den einzelnen Sendern über die jeweils zugeordnete Antennenanordnung ausgesandten Funksignale jeweils abgeschwächt, sodass kein einzelnes Funksignal mehr in entsprechender Entfernung empfangen werden kann.

Gleichermaßen ist es zu einem späteren Zeitpunkt auch für Unbefugte nicht möglich, einzelne Sender auszulesen. Sobald jedoch ein Funksignal empfangen wird, deutet dies auf das Vorhandensein mindestens einer Verbindungsanordnung hin, die sich im separierten Verbindungsstatus oder nicht korrekt verbundenen Verbindungsstatus befindet. Über eine anschließende Einzelüberprüfung kann sodann die fehlerhafte Verbindung ermittelt werden.

Nach einem Vorschlag der Erfindung ist vorgesehen, dass die Verbinderteile als Schnellkupplung einer Kühlmittelleitung ausgebildet sind, wobei ein Verbinderteil als Mutterstück ausgebildet ist und den Sender sowie die Antennenanordnung trägt und das andere Verbinderteil als Vaterstück in das Mutterstück einsteckbar ist und die Abschwächungseinrichtung im verbundenen Verbindungsstatus in Wirkverbindung mit der Antennenanordnung bringt. Derartige Schnellkupplungen einer Kühlmittelleitung sind beispielsweise im Fahrzeugbau üblich und standardisiert, wobei beispielhaft die SAE- und/oder VDA -Schnellkupplung genannt sei. Aufgrund der Anordnung des Senders sowie der Antennenanordnung am Mutterstück ist dieses ohne Anwesenheit des komplementären Vaterstücks in der Lage, ein vom Sender generiertes Funksignal über die Antennenanordnung auslesbar zu senden, d. h. ein solches gesendetes und entsprechend empfangbares Funksignal deutet auf die Anwesenheit einer Verbindungsanordnung im separierten Verbindungsstatus hin. Sobald das Vaterstück in das Mutterstück eingesteckt ist und die Verbindungsanordnung den verbundenen Verbindungsstatus annimmt, bringt das Vaterstück die Abschwächungseinrichtung in Wirkverbindung mit der Antennenanordnung, woraufhin das vom Sender über die Antennenanordnung gesendete und auslesbare Funksignal signifikant abgeschwächt und in einer gewissen Entfernung zum Sender bzw. der Antennenanordnung nicht mehr auslesbar ist. Ein solches nicht empfangenes Funksignal deutet erfindungsgemäß auf eine Verbindungsanordnung im verbundenen Verbindungsstatus hin.

Nach der Erfindung ist als Abschwächungseinrichtung ein Leitungsabschnitt in Form eines elektrischen Leiters vorgesehen, der im verbundenen Verbindungsstatus die Enden der Antennenanordnung kontaktiert und elektrisch verbindet, sodass die Antennenanordnung entsprechend über den Leitungsabschnitt kurzgeschlossen wird. Dies hat je nach Konfiguration der Antennenanordnung eine Unterdrückung des abgestrahlten Antennensignals und/oder eine Frequenzverschiebung des abgestrahlten Antennensignals zur Folge. Beispielsweise kann bei Einsatz eines RFID Chips als Sender das üblicherweise auf einer Frequenz von 920 MHz dauerhaft gesendete HF/UHF-Signal durch Kurzschluss der Antennenanordnung mittels eines entsprechenden Leitungsabschnittes auf eine Frequenz von ca. 700 MHz verschoben werden, mit der Folge, dass die Reichweite des Funksignals für einen entsprechend eingerichteten Empfänger dramatisch zusammenbricht. Ein im separierten Verbindungsstatus beispielsweise aus einer Entfernung von 2 m gut empfangbares Funksignal eines RFID Chips ist im verbundenen Verbindungsstatus und entsprechend kurzgeschlossener Antennenanordnung in einem solchen Fall bereits ab einer Entfernung von 0,5 m nicht mehr empfangbar, da die maximale Sendereichweite beispielsweise auf 0,3 m begrenzt wird.

Der Leitungsabschnitt kann nach einem Vorschlag der Erfindung von einem metallischen Federbügel gebildet sein, wie er beispielsweise an den eingangs erwähnten SAE- oder VDA-Steckkupplungen für die Verrastung von Mutter- und Vaterstück vorgesehen ist. Die am Mutterstück angeordnete Antennenanordnung umfasst in einem solchen Fall beispielsweise zwei Kontaktenden, die bei eingestecktem Vaterstück durch dieses an den Federbügel angepresst werden. Erfindungsgemäß wird insoweit zur Ausbildung der Verbindungsanordnung kein zusätzliches Bauteil benötigt, vielmehr wird der ohnehin an üblichen Steckkupplungen vorhandene metallische Federbügel genutzt, um im verbundenen Verbindungsstatus als Abschwächungseinrichtung zu wirken und die Antennenanordnung kurzzuschließen.

Nach einem Vorschlag, der nicht im Rahmen der Ansprüche liegt, kann als Abschwächungseinrichtung auch ein verschiebbares Abschirmelement vorgesehen sein, welches im separierten Verbindungsstatus die Antennenanordnung freigibt und im verbundenen Verbindungsstatus die Antennenanordnung zumindest bereichsweise überdeckt und abschirmt.

Ein solches Abschirmelement kann beispielsweise verschieblich im Mutterstück geführt sein, sodass es bei Einstecken des Vaterstücks in eine entsprechende Steckkupplung von diesem mit der Antennenanordnung in Wirkverbindung gebracht wird und das von dieser gesendete Funksignal abschwächt.

Das Abschirmelement kann beispielsweise als Schiebeelement ringförmig im Mutterstück angeordnet sein und bei Einstecken des Vaterstücks aus einer die Antennenanordnung freigebenden Position in eine die Antennenanordnung überdeckende und abschirmende Position verschoben werden.

Nach einem weiteren Vorschlag der Erfindung ist der Sender als RFID Chip ausgebildet und die Antennenanordnung umfasst eine am RFID Chip angebrachte Primärantenne, die üblicherweise bei Herstellung eines RFID Chips erzeugt und vorgesehen wird. Zusätzlich wird erfindungsgemäß eine induktiv mit der Primärantenne verbundene Sekundärantenne vorgesehen, beispielsweise eine induktiv an die Primärantenne koppelnde Leiterschleife, die bereichsweise am den RFID Chip tragenden Verbinderteil zum Beispiel auf dessen Oberfläche angeordnet wird. Im verbundenen Verbindungsstatus tritt diese Sekundärantenne mit der Abschwächungseinrichtung in Wirkverbindung, d. h. beispielsweise wird die Sekundärantenne vom Leitungsabschnitt kontaktiert oder vom Abschirmelement abgedeckt und abgeschirmt.

Bei einem solchen RFID Chip kann es sich sowohl um einen aktiv sendenden oder auch um einen fremderregten Sender handeln. In beiden Fällen ist der RFID Chip vorzugsweise mitsamt der Primärantenne auf einem gemeinsamen Trägermaterial angeordnet, wie es prinzipiell z.B. von SIM-Karten eines Mobiltelefons bekannt ist und dieses den Chip und die Primärantenne aufweisende Trägermaterial wird vorzugsweise in einer entsprechenden Ausnehmung des zugehörigen Verbinderteils positioniert.

Im separierten Verbindungsstatus dient die Sekundärantenne der Erhöhung der Sendeleistung des mit der Primärantenne ausgerüsteten RFID Chips, um das ausgesendete Funksignal auch in einer größeren Entfernung von beispielsweise 2 m zuverlässig empfangen zu können. Im verbundenen Verbindungsstatus wird jedoch durch die Einwirkung der Abschwächungseinrichtung diese die Sendeleistung erhöhende Funktion der Sekundärantenne aufgehoben, sodass das vom RFID Chip ausgesendete Funksignal lediglich noch in kurzer Entfernung von beispielsweise 0,5 m zuverlässig empfangen werden kann.

Demgemäß besteht beispielsweise bei Ausrüstung eines Fahrzeugakkus eines Elektrofahrzeugs mit einer Vielzahl der erfindungsgemäßen Verbindungsanordnungen im Bereich der Kühlmittelleitungen die Möglichkeit, eine Qualitätskontrolle effektiv durchzuführen, in dem das fertiggestellte Elektrofahrzeug bzw. dessen Fahrzeugakku durch ein RFID Reader Gate hindurchgeführt wird und mit einem entsprechenden Reader in einer Entfernung von maximal 2 m alle verbauten erfindungsgemäßen Verbindungsanordnungen gemeinsam auf das Vorhandensein eines gesendeten Funksignals abgescannt werden. Wenn alle verbauten erfindungsgemäßen Verbindungsanordnungen sich korrekterweise im verbundenen Verbindungsstatus befinden, sind alle zugeordneten Abschwächungseinrichtungen aktiviert und es wird kein Funksignal empfangen, da die Entfernung zum am Gate verbauten Reader zu groß ist. Ebenso ist es nicht möglich, nachträglich einzelne RFID Chips der verbauten Verbindungsanordnungen auszulesen. Sollte jedoch mindestens eine der verbauten erfindungsgemäßen Verbindungsanordnungen sich nicht im korrekt verbundenen Verbindungsstatus befinden, ist auch die zugeordnete Abschwächungseinrichtung nicht in Wirkverbindung mit der Antennenanordnung und schwächt das gesendete Funksignal nicht ab, sodass es vom Reader auch in der Entfernung zum Gate zuverlässig empfangen wird und eine entsprechende Fehlermeldung und/oder -suche auslösen kann.

Die zueinander komplementär ausgebildeten Verbinderteile der erfindungsgemäßen Verbindungsanordnung können sowohl durch eine Steckverbindung, aber auch durch Schraubverbindung oder eine Bajonettverbindung oder andere geeignete lösbare oder unlösbare Verbindungsart miteinander verbunden werden.

Das erfindungsgemäße Verfahren zum auslesbaren Anzeigen eines Verbindungsstatus einer Verbindungsanordnung beruht darauf, dass die Verbindungsanordnung zwei zueinander komplementäre und miteinander verbindbare Verbinderteile umfasst, welche aus einem separierten Verbindungsstatus in einen verbundenen Verbindungsstatus verbindbar sind, wobei ein Sender und eine zugeordnete Antennenanordnung vorgesehen sind, um ein vom Verbindungsstatus abhängiges auslesbares Funksignal zu senden. Erfindungsgemäß ist vorgesehen, dass im verbundenen Verbindungsstatus der Verbinderteile das auslesbare Funksignal abgeschwächt wird, sodass es nur in geringerer Reichweite gegenüber dem im separierten Verbindungsstatus empfangbaren Funksignal empfangen werden kann.

Nach dem erfindungsgemäßen Verfahren wird diese Abschwächung dadurch bewirkt, dass im verbundenen Verbindungsstatus die Antennenanordnung kurzgeschlossen wird und eine Phasenverschiebung des gesendeten Funksignals bewirkt wird, die in einer reduzierten Reichweite gegenüber einem auf die ursprüngliche Sendefrequenz eingestellten Empfänger resultiert.

In einer Alternative des Verfahrens, die nicht im Rahmen der Ansprüche liegt, wird die Abschwächung dadurch bewirkt, dass im verbundenen Verbindungsstatus die Antennenanordnung unter Abschwächung des Funksignals abgeschirmt wird.

Weitere Einzelheiten und Ausgestaltungen der Erfindung werden nachfolgend anhand von Ausführungsbeispielen in der Zeichnung erläutert. Es zeigen:
- Figur 1: die Seitenansicht einer Verbindungsanordnung in einer Ausführungsform der Erfindung;
- Figur 2: die Seitenansicht eines Mutterstücks der Verbindungsanordnung gemäß Figur 1;
- Figur 3: die Seitenansicht des Mutterstücks gemäß Figur 2 in der Ausrichtung gemäß Figur 1;
- Figur 4: die Frontansicht auf das Mutterstück gemäß Figur 3 in vergrößertem Maßstab;
- Figur 5: die Einzelheit Y gemäß Figur 4 in weiter vergrößertem Maßstab;
- Figur 6: einen Schnitt durch die Verbindungsanordnung gemäß Figur 1;
- Figur 7: die Seitenansicht eines Mutterstück der Verbindungsanordnung in einer anderen Ausführungsform, die nicht im Rahmen der Ansprüche liegt;
- Figur 8: die Seitenansicht des Mutterstück gemäß Figur 7 aus der entgegengesetzten Richtung betrachtet;
- Figur 9: die zusammengesteckte Verbindungsanordnung der anderen Ausführungsform gemäß Figuren 7 und 8.

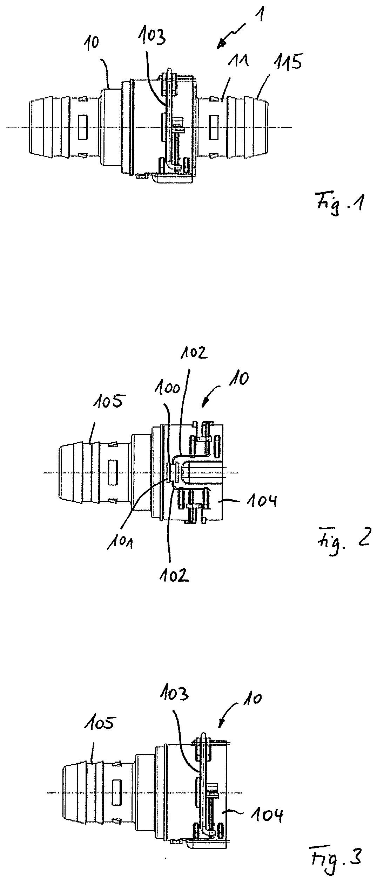

Aus der Figur 1 ist die Seitenansicht einer Verbindungsanordnung 1 ersichtlich, wie sie beispielsweise als Schnellkupplung für eine Kühlmittelleitung Verwendung findet und im Fahrzeugbau unter der Bezeichnung VDA-Schnellkupplung bekannt ist.

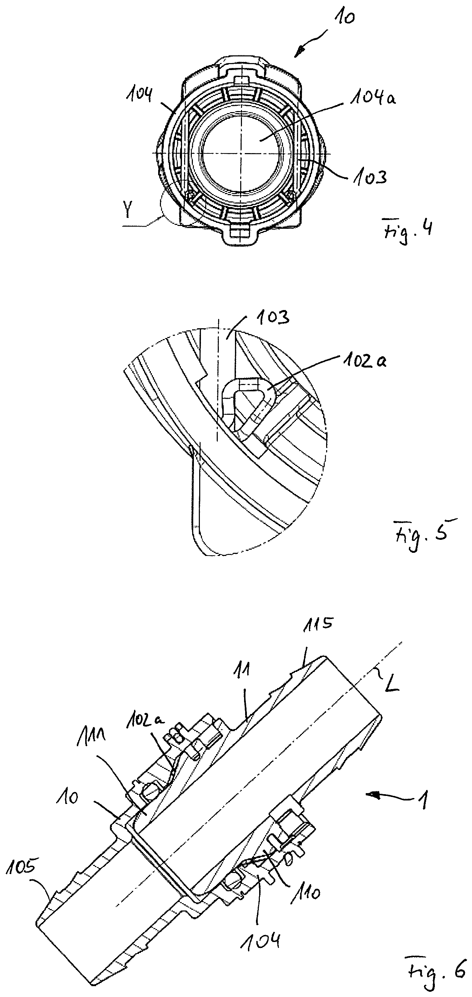

Die Verbindungsanordnung 1 umfasst ein Mutterstück 10 sowie ein hierzu komplementärausgebildetes Vaterstück 11, welches mit einem hierfür vorgesehenen Steckstutzen 111 in einen zylindrischen Einsteckring 104 mit Einstecköffnung 104a des Mutterstücks 10 einsteckbar ist, siehe hierzu auch die Schnittdarstellung gemäß Figur 6, um ein durchgehendes Lumen für den Flüssigkeitstransport auszubilden.

Mittels eines am zylindrischen Einsteckring 104 des Mutterstücks 10 vorhandenen und bereichsweise durch die Einstecköffnung 104a verlaufenden Federbügels 103, der aus einem elektrisch leitfähigen Metall hergestellt ist, kann das gemäß Darstellung in Figur 6 in das Mutterstück 10 eingesteckte Vaterstück 11 in dieser Position, dem sogenannten verbundenen Verbindungsstatus am Mutterstück 10 lösbar verrasten, was üblicherweise mit einem Klickgeräusch verbunden ist.

Um diesen korrekt verbundenen Verbindungsstatus zu einem beliebigen Zeitpunkt, beispielsweise im Rahmen der Qualitätskontrolle der bewirkten Steckverbindungen prüfen zu können, ist am Mutterstück 10 ein aus der Figur 2 ersichtlicher Sender in Form eines **RFID** Chips 100 mit zugeordneter Primärantenne 101 an einem geeigneten Umfangsbereich des Einsteckrings 104 angebracht. Das Funksignal des **RFID** Chips 100 mit dessen Primärantenne 101 weist üblicherweise nur eine geringe Reichweite auf, weshalb eine Sekundärantenne 102 in Gestalt einer entlang des Einsteckrings 104 verlaufenden Metalldrahts vorgesehen ist, die induktiv an die Primärantenne 101 angekoppelt und für eine erhebliche Reichweitenerhöhung des vom **RFID** Chip 100 gesendeten Funksignals sorgt.

Die aus der vergrößerten Darstellung in Figur 5 ersichtlichen Enden 102a der Sekundärantenne 102 sind durch die Wandung des Einsteckrings 104 hindurch auf die Innenoberfläche geführt und stehen radial nach innen über diese vor, zum Beispiel in Gestalt eines abgewinkelten Verlaufs, wie aus der Figur 5 ersichtlich ist und liegen unmittelbar den Enden des Federbügels 103 gegenüber, ohne diesen im Ruhezustand zu kontaktieren.

Sobald das Vaterstück 11 gemäß der Darstellung in Figur 1 vollständig in das Mutterstück 10 eingesteckt ist, werden die Enden 102a der Sekundärantenne von dem an Steckstutzen 111 des Vaterstücks 11 ausgebildeten Konus 110 radial nach außen gedrückt, wodurch sie zur Anlage an den Enden des Federbügels 103 kommen und diese elektrisch kontaktieren. Damit wird die Sekundärantenne 102 über den Federbügel 103 im verbundenen Verbindungsstatus kurzgeschlossen. Dies führt zu einer Frequenzverschiebung des ausgesendeten Funksignals z.B. von den üblichen 920 MHz auf etwa 700 MHz. Damit einher geht eine signifikante Verringerung der Reichweite des Funksignals auf der ursprünglichen Sendefrequenz von z.B. 10m auf unter 2m.

Es ist somit möglich, eine oder mehrere der in der Figur 1 dargestellten Verbindungsanordnungen 1 auf größere Entfernung auf den verbundenen Verbindungsstatus zu überprüfen. Sofern kein Funksignal eines RFID Chips 100 empfangen wird, befinden sich sämtliche geprüften Verbindungsanordnungen im verbundenen Verbindungzustand mit entsprechend kurzgeschlosser Sekundärantenne 102.

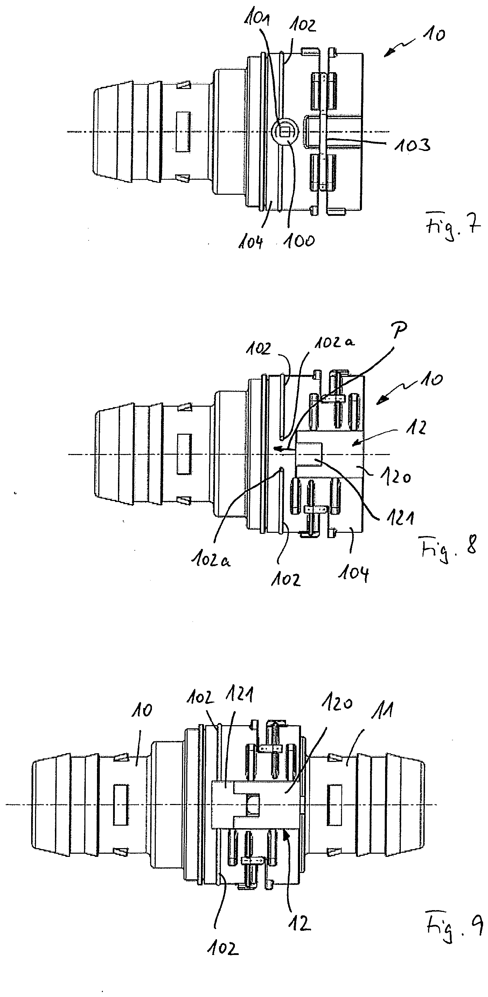

Aus den Figuren 7-9 ist eine gegenüber dem vorangehend erläuterten Ausführungsbeispiel abgewandelte Ausführungsform einer Verbindungsanordnung ersichtlich, bei der gleiche Teile gleiche Bezugszeichen erhalten haben und zur Vermeidung von Wiederholungen nicht nochmals gesondert erläutert werden, sofern dies nicht zum Verständnis der Erfindung erforderlich ist.

Im Gegensatz zum Ausführungsbeispiel gemäß den Figuren 1-6 sind im Ausführungsbeispiel gemäß Figuren 7-9 die Enden 102a der Sekundärantenne 102 nicht auf die Innenseite des Einsteckrings 104 verlegt, sondern enden auf der dem RFID Chip 100 diametral gegenüberliegenden Umfangsfläche des Einsteckrings 104 in geringem Abstand voneinander. In dieser in der Figur 8 ersichtlichen Position erhöht somit die induktiv an die Primärantenne 101 angekoppelte Sekundärantenne 102 die Sendereichweite des RFID Chips 100.

Wie insbesondere aus der Figur 8 ersichtlich, ist benachbart zu den beiden Enden 102a der Sekundärantenne 102 auf dem äußeren Umfang des Einsteckrings 104 ein Abschirmelement 12 angeordnet, welches ein Gehäuse 120 sowie ein verschieblich im Gehäuse 120 geführten Schieber 121 umfasst, der in axialer Richtung des Mutterstücks 10 aus der in der Figur 8 dargestellten Position gemäß Pfeil P in eine aus der Figur 9 ersichtliche Position verschiebbar ist, in welcher er die Enden 102a der Sekundärantenne 102 überdeckt. Dabei ist zumindest der Schieber 121 aus einem für Funkwellen undurchlässigen oder diese abschirmenden Material, beispielsweise einem metallischen Werkstoff oder einen mit Metallpartikeln gefüllten Kunststoff hergestellt.

Die Bewegung des Schiebers 121 aus der in der Figur 8 dargestellten und die Enden 102a der Sekundärantenne 102 freigebenden Position in die in der Figur 9 dargestellte abschirmende Position wird durch das in das Mutterstück 10 eingesteckte Vaterstück 11 bewirkt, indem der Konus 110 einen entsprechenden Vorsprung des Schiebers 121 beim Einstecken in das Mutterstück 10 mitnimmt. Auch bei diesem Ausführungsbeispiel wird folglich der verbundenen Verbindungsstatus durch eine abgeschwächte Sendeleistung des RFID Chips 100 infolge der Abschwächung der Antennenanordnung bewirkt.

Mit der vorangehend beschriebenen Verbindungsanordnung bzw. dem Verfahren ist es beispielsweise einem Fahrzeughersteller oder Lieferanten von E-Chassis möglich, anstelle einer händischen Einzelprüfung aller verbauten Verbindungsanordnungen 1 auf ihren verbundenen Verbindungsstatus eine gemeinsame Prüfung aller verbauten Verbindungsanordnungen 1 zeitgleich durchzuführen, in dem das Fahrzeug oder das E-Chassis durch ein Lesetor oder Gate gefahren wird, an welchem ein entsprechender Empfänger der Funksignale in ausreichender Entfernung positioniert ist. Wenn die von allen verbauten Verbindungsanordnungen 1 ausgesendeten Funksignale an diesem Lesetor nicht oder allenfalls schwach empfangen werden, zeigt dies den verbundenen Verbindungsstatus aller verbauten Verbindungsanordnungen 1 an. Wird hingegen ein Funksignal in der entsprechenden Stärke empfangen, rührt dies von mindestens einer verbauten Verbindungsanordnung 1 her, die sich nicht im verbundenen, sondern im separierten Verbindungsstatus befindet. Mittels einer entsprechenden Software kann neben einer dann möglichen händischen Einzelprüfung bei entsprechender Ausrüstung des Lesetors auch unmittelbar angezeigt werden, an welcher verbauten Verbindungsanordnung 1 der separierte Verbindungsstatus vorliegt.

Die vorangehend beschriebenen Verbindungsanordnungen und das Verfahren eignen sich nicht nur für Anwendungen im Bereich Automotive, sondern auch für beliebige weitere Verbindungsanordnungen in der Industrie, Haushalt, Medizin etc.

### Bezugszeichenliste:

- 1:: Verbindungsanordnung
- 10:: Mutterstück
- 11:: Vaterstück
- 12:: Abschirmelement
- 100:: RFID Chip
- 101:: Primärantenne
- 102:: Sekundärantenne
- 102a:: Enden der Sekundärantenne
- 103:: Federbügel
- 104:: Einsteckring
- 104a:: Einstecköffnung
- 110:: Konus
- 111:: Steckstutzen
- 120:: Gehäuse
- 121:: Schieber

- P:: Verschieberichtung

## Patentansprüche

1. Verbindungsanordnung (1), umfassend zwei zueinander komplementäre Verbinderteile, die aus einem separierten Verbindungsstatus in einen verbundenen Verbindungsstatus verbindbar sind, wobei ein Sender und eine zugeordnete Antennenanordnung vorgesehen sind, mittels derer ein den Verbindungsstatus signalisierendes Funksignal erzeugbar und über die Antennenanordnung sendbar ist, wobei eine Abschwächungseinrichtung vorgesehen ist, die im verbundenen Verbindungsstatus der Verbindungsanordnung mit der Antennenanordnung in Wirkverbindung tritt und das von dieser gesendete Funksignal abschwächt **dadurch gekennzeichnet, dass** als Abschwächungseinrichtung ein Leitungsabschnitt vorgesehen ist, der im verbundenen Verbindungsstatus die Enden der Antennenanordnung kontaktiert und elektrisch verbindet.

2. Verbindungsanordnung (1) nach Anspruch 1, **dadurch gekennzeichnet, dass** die Verbinderteile als Schnellkupplung einer Kühlmittelleitung ausgebildet sind, wobei ein Verbinderteil als Mutterstück (10) ausgebildet ist und den Sender sowie die Antennenanordnung trägt und das andere Verbinderteil als Vaterstück (11) in das Mutterstück (10) einsteckbar ist und die Abschwächungseinrichtung im verbundenen Verbinderstatus in Wirkverbindung mit der Antennenanordnung bringt.

3. Verbindungsanordnung (1) nach Anspruch 2, **dadurch gekennzeichnet, dass** der Leitungsabschnitt von einem metallischen Federbügel (103) gebildet ist, der am Mutterstück (10) zum Verrasten mit dem einsteckbaren Vaterstück (11) angeordnet ist und im verbundenen Verbindungsstatus die Enden der Antennenanordnung kontaktiert und elektrisch verbindet.

4. Verbindungsanordnung (1) nach einem der Ansprüche 1 bis 3, **dadurch gekennzeichnet, dass** der Sender als RFID Chip (100) ausgebildet ist und die Antennenanordnung eine am RFID Chip (100) angebrachte Primärantenne (101) und eine induktiv mit der Primärantenne (101) verbundene Sekundärantenne (102) umfasst, die im verbundenen Verbindungsstatus mit der Abschwächungseinrichtung in Wirkverbindung tritt.

5. Verfahren zum auslesbaren Anzeigen eines Verbindungsstatus einer Verbindungsanordnung (1), die zwei zueinander komplementäre und miteinander verbindbare Verbinderteile umfasst, welche aus einem separierten Verbindungsstatus in einen verbundenen Verbindungsstatus verbindbar sind, wobei ein Sender und eine zugeordnete Antennenanordnung vorgesehen sind, um ein vom Verbindungsstatus abhängiges auslesbares Funksignal zu senden, wobei im verbundenen Verbindungsstatus der Verbinderteile das auslesbare Funksignal abgeschwächt wird, **dadurch gekennzeichnet, dass** im verbundenen Verbindungsstatus die Antennenanordnung kurzgeschlossen wird und eine Phasenverschiebung des gesendeten Funksignals bewirkt wird.

## Claims

1. Connection arrangement (1) comprising two mutually complementary connector parts which are connectable from a separated connection status into a connected connection status, wherein there is provision for a transmitter and an associated antenna arrangement, by means of which a radio signal signalling the connection status is able to be generated and able to be transmitted by way of the antenna arrangement, wherein there is provision for an attenuation device which, in the connected connection status of the connection arrangement, operatively connects to the antenna arrangement and attenuates the radio signal transmitted by said antenna arrangement, **characterized in that** the attenuation device provided is a line portion which makes contact with and electrically connects the ends of the antenna arrangement in the connected connection status.

2. Connection arrangement (1) according to Claim 1, **characterized in that** the connector parts are in the form of a quick coupling of a coolant line, wherein one connector part is in the form of a mother piece (10) and carries the transmitter and the antenna arrangement and the other connector part is insertable into the mother piece (10) as a father piece (11) and operatively connects the attenuation device to the antenna arrangement in the connected connector status.

3. Connection arrangement (1) according to Claim 2, **characterized in that** the line portion is formed by a metallic spring clip (103), which is arranged on the mother piece (10) to latch with the insertable father piece (11) and makes contact with and electrically connects the ends of the antenna arrangement in the connected connection status.

4. Connection arrangement (1) according to one of Claims 1 to 3, **characterized in that** the transmitter is in the form of an **RFID** chip (100) and the antenna arrangement comprises a primary antenna (101) mounted on the **RFID** chip (100) and a secondary antenna (102), which is inductively connected to the primary antenna (101) and operatively connects to the attenuation device in the connected connection status.

5. Method for readably displaying a connection status of a connection arrangement (1) which comprises two mutually complementary and interconnectable connector parts which are connectable from a separated connection status into a connected connection status, wherein there is provision for a transmitter and an associated antenna arrangement in order to transmit a readable radio signal which is dependent on the connection status, wherein the readable radio signal is attenuated in the connected connection status of the connector parts, **characterized in that** the antenna arrangement is shorted in the connected connection status and a phase shift of the transmitted radio signal is brought about.

## Revendications

1. Agencement de raccordement (1), comprenant deux pièces de raccordement mutuellement complémentaires qui peuvent être raccordées d'un état de raccordement séparé en un état de raccordement raccordé, dans lequel un émetteur et un agencement d'antenne associé sont prévus, au moyen desquels un signal radio signalant l'état de raccordement peut être produit et peut être envoyé par l'intermédiaire de l'agencement d'antenne, dans lequel un dispositif d'affaiblissement est prévu qui, à l'état de raccordement raccordé de l'agencement de raccordement, entre en liaison active avec l'agencement d'antenne et affaiblit le signal radio envoyé par celui-ci, **caractérisé en ce que** comme dispositif d'affaiblissement, une section de ligne est prévue qui, à l'état de raccordement raccordé met en contact et relie électriquement les extrémités de l'agencement d'antenne.

2. Agencement de raccordement (1) selon la revendication 1, **caractérisé en ce que** les pièces de raccordement sont réalisées sous forme de raccord rapide d'une conduite de produit réfrigérant, dans lequel une pièce de raccordement est réalisée sous forme de pièce femelle (10) et porte l'émetteur ainsi que l'agencement d'antenne, et l'autre pièce de raccordement peut être insérée en tant que pièce mâle (11) dans la pièce femelle (10) et amène le dispositif d'affaiblissement, à l'état raccordé, en liaison active avec l'agencement d'antenne.

3. Agencement de raccordement (1) selon la revendication 2, **caractérisé en ce que** la section de conduite est réalisée par un étrier ressort métallique (103) qui est disposé au niveau de la pièce femelle (10) pour s'enclencher dans la pièce mâle (11) et, à l'état de raccordement raccordé, met en contact et relie électriquement les extrémités de l'agencement d'antenne.

4. Agencement de raccordement (1) selon l'une quelconque des revendications 1 à 3, **caractérisé en ce que** l'émetteur est réalisé sous forme de puce **RFID** (100), et l'agencement d'antenne comprend une antenne primaire (101) fixée à la puce **RFID** (100) et une antenne secondaire (102) reliée par induction à l'antenne primaire (101) qui, à l'état de raccordement raccordé, entre en liaison active avec le dispositif d'affaiblissement.

5. Procédé pour l'affichage lisible d'un état de raccordement d'un agencement de raccordement (1) qui comprend deux pièces de raccordement mutuellement complémentaires et pouvant être reliées ensemble qui peuvent être raccordées d'un état de raccordement séparé en un état de raccordement raccordé, dans lequel un émetteur et un agencement d'antenne associés sont prévus pour envoyer un signal radio lisible, en fonction de l'état de raccordement, dans lequel, à l'état de raccordement raccordé des pièces de raccordement, le signal radio lisible est affaibli, **caractérisé en ce qu'**à l'état de raccordement raccordé, l'agencement d'antenne est court-circuité et un déphasage du signal radio envoyé est provoqué.
